# EUROPÄISCHE PATENTSCHRIFT

(11) **EP 0 356 777 B1**
(45) Veröffentlichungstag und Bekanntmachung des Hinweises auf die Patenterteilung: **07.09.1994**
(21) Anmeldenummer: 89114772.0
(22) Anmeldetag: 10.08.1989
(51) Int. Cl.: C09J 7/02

(54) **Selbstklebender Gegenstand**
Self-adhesive article
Objet auto-adhésif

(30) Priorität: 27.08.1988 DE 3829077
(43) Veröffentlichungstag der Anmeldung: 07.03.1990
(73) Patentinhaber: Beiersdorf Aktiengesellschaft, 20245 Hamburg (DE)
(72) Erfinder: Külper, Klaus, Dr., D-2103 Hamburg 95 (DE); Jauchen, Peter, D-2000 Hamburg 61 (DE)
(74) Vertreter: Dinné, Erlend

(56) Entgegenhaltungen:
- DE-A- 3 433 293
- FR-A- 2 587 396
- US-A- 3 364 063

## Beschreibung

Die Erfindung betrifft einen selbstklebenden Gegenstand, insbesondere einen Klebefilm für den Büro- und Haushaltsbereich (general purpose), sowie ein Verfahren zu seiner Herstellung.

Universalklebebänder und -filme zum Verpacken, Befestigen, Bündeln, Schützen, Verstärken, Fixieren etc. im Haushalt und Bürobereich (general purpose) sind seit langem bekannt und werden in großem Umfang gefertigt.

Wie in den beiden Standardwerken (Handbook of Pressure Sensitive Adhesive Technology von D. Satas, Van Nostrand Reinhold Company, N.Y. 1982 und Handbook of Adhesives von I. Skeist, 2. Aufl., Van Nostrand Reinhold Company, N.Y. 1977) ausführlich dargelegt wird, sind druckempfindliche Kleber von überragender ökonomischer Bedeutung. Als Träger finden neben dünnen Filmen aus diversen Kunststoffen wie Cellophan, PVC, Polyester, Polyolefine, Celluloseacetat etc. auch Gewebe, Vliese, Papier und Folien sowie faserverstärkte Substrate Anwendung. In den USA dominieren für den Universalfilm Polyester und biaxiall gerecktes Polypropylen, während in Europa z.Zt. PVC noch stark vertreten ist. Die druckempfindlichen Klebemassen sind im Normalfall aus Natur- oder Synthesekautschuk-Elastomeren in Verbindung mit Tackifierharzen gemischt und werden aus organischer Lösung aufgetragen. Neben Kautschukklebern kommen zunehmend Blockcopolymere und insbesondere Polyacrylate zum Einsatz, letztere besonders wegen ihrer guten Transparenz und geringen Eigenfärbung, der excellenten UV- und Alterungsstabilität sowie der geringen Weichmacherwanderungsprobleme. Aus ökologischen Gründen ist der Trend ausgeprägt, von organischen Lösungsmitteln wie aliphatischen und aromatischen Kohlenwasserstoffen, Ketonen und Estern auf wäßrige oder 100%-Systeme überzugehen, wobei neben der Nichtbrennbarkeit die höheren Feststoffgehalte sowie die günstigen Kosten vorteilhaft sind.

So beschreibt die DE-A-29 40 136 druckempfindliche Klebebänder, die mit einem wäßrigen Emulsionspolymerisationsprodukt aus einem Gemisch von Acrylmonomeren mit einem Emulgator mindestens einseitig beschichtet werden.

In DE-A-32 20 886 ist von Klebebändern auf Basis von PVC- oder PP-Folien die Rede, die zur besseren Verankerung der Klebemassen mit einem wäßrigen Polyesterhaftvermittler ausgerüstet werden.

DE-A-33 19 240 beschreibt die gute Verankerung von Haftklebedispersionen, bestehend aus Copolymeren von Acrlysäureestern, monoolefinischen Mono- und/oder Dicarbonsäuren und Carbonylgruppen enthaltenden Monomeren sowie geeigneten Zusätzen von wasserlöslichen aliphatischen Dihydrazinverbindungen auf polyolefinischen Trägern zwecks Herstellung von Protective Films, Klebebändern und Klebefolien.

Zum ein- oder zweiseitigem Aufbringen der Haftkleber wird auf die üblichen Beschichtungsmethoden wie Spritzen, Rakeln, Rollen, Gießen, Walzen oder Tauchen verwiesen: der Haftkleber wird vollflächig in einer möglichst glatten Schicht mit einem Auftrag von 17-51 g/m² (Handbook of Adhesives von I. Skeist, 2. Auflage, Van Nostrand Reinhold Company, N.Y. 1977 S. 728) aufgetragen, wobei käufliche General-purpose-Klebefilme durchweg Auftragsmengen von 20 - 25 g /m² aufweisen.

Bei der Herstellung bzw. Anwendung der vorbeschriebenen Klebefilme und -bänder machen sich jedoch zahlreiche Eigenschaften nachteilig bemerkbar:
- der Anspruch, transparente, glasklare Filme zu fertigen, läßt sich in den seltensten Fällen und nur bei erhöhtem, kostenträchtigem Aufwand erfüllen. Durch den partiellen, unregelmäßigen Einschluß von Luft ("Fischaugen") wird ein unbefriedigendes visuelles Erscheinungsbild verursacht.
- Aufgrund des kalten Flusses der verwendeten Klebemassen tritt bevorzugt bei straffer Wicklung das bekannte Phänomen des Teleskopierens auf, das einen Einsatz derartiger Rollen in Hand- oder Tischabrollern sowie in Automaten erschwert oder unmöglich macht.
- Durch die hohe Anfangsklebrigkeit ist es bei den bekannten Produkten kaum möglich, bei fehlerhafter Verklebung ohne Zerstörung des Untergrundes, besonders bei Papier, eine Korrektur durchzuführen. Bei Haftuntergründen geringer Festigkeit, wie Schreib- oder Zeitungspapier, führt der Versuch des Wiederablösens zu Faserausrissen, teilweise zu vollflächigen Spalten des Untergrundes.
- Lufteinschlüsse ergeben Blasen, die bei nicht porösen Haftuntergründen nicht entweichen können, und stören den optischen Eindruck der Verklebung und die weitere Verwendung des beklebten Substrats. Um ein blasenfreies Verkleben auf glatten und undurchlässigen Haftgründen zu ermöglichen und die geschilderten Nachteile zu vermeiden, wird in US-B 4.581.087 sowie JP-A-59/18777 ein Verfahren beschrieben, Klebefilme mittels Stachelwalzen luftdurchlässig zu perforieren, ein Verfahren, dessen Nachteile offensichtlich sind.

Aufgabe der Erfindung war es, hier Abhilfe zu schaffen, insbesondere selbstklebende, permanent zu verklebende Gegenstände, insbesondere Selbstklebebänder, zu schaffen, die die Nachteile des Standes der Technik nicht oder zumindest nicht in dem Ausmaß aufweisen.

Demgemäß betrifft die Erfindung selbstklebende Gegenstände, insbesondere Selbstklebebänder, Etiketten und dergleichen, wie sie im Patentanspruch 1 und den Unteransprüchen näher gekennzeichnet sind.

Dabei macht sich die Erfindung eine Technologie zunutze, die aus dem Bereich der reversiblen Selbstklebeartikel bekannt geworden ist, nämlich das Verkleben mittels Klebstoff-Segmenten. Dabei werden nicht vollflächig mit Selbstklebemasse, sondern diskontinuierlich, segmentweise beschichtete Träger verwendet. Die einzelnen Haftstellen sind überaus geeignet für ein reversibles Verkleben, jede einzelne Haftstelle beinhaltet zugleich eine Sollbruchstelle, die ein zerstörungsfreies Wiederabziehen und erneutes Verkleben ermöglicht, selbst auf empfindlichen Untergründen, wie Papier. Beschrieben wird dies in WO 85/04602, WO 87/05315 und EP-B 149.135.

Auch aus der DE-A 3.433.293 sind selbstklebende Kunststoffolien bekannt, die im Siebdruck aufgetragen eine Vielzahl von einzelnen, räumlich voneinander getrennten Klebstoff-Punkten aufweisen. Wenn auch damit insbesondere Klarsichtfolien beschrieben werden, die länger auf einem Substrat haften sollen, so haben diese Folien dennoch den Charakter einer reversiblen Verklebung, während das wesentliche Interesse in einem einfacheren Verkleben, einem optisch befriedigenden Erscheinungsbild und möglichen Ausweichen von Luft liegt. Dieser Charakter einer reversiblen Verklebung entspricht dem Stand der Technik etwa gemäß EP-B 149.135 und wird vorteilhaft auch z.B. für Verbandspflaster genutzt (S. 6 oben), die demgemäß später von der Haut des Patienten leichter gelöst werden können. Für ein gutes Haften der beschriebenen Folien wird folgerichtig empfohlen (S. 8 unten), die zu kaschierende Oberfläche vorab mit einer eigenen Klebstoffbeschichtung zu versehen.

Dieses reversible Verkleben, das diesem Stand der Technik immanent ist, mußte sich aus prinzipiellen Überlegungen für ein irreversibles Verkleben schlecht eignen. Es erschien nicht erfolgversprechend, die in diesem System liegenden Verklebungs-Prinzipien, die aus Sicht eines irreversiblen Verklebens nachteilig sind, vorteilhaft für ein irreversibles Produkt verwenden zu können. Insbesondere mußte es als nicht aussichtsreich erscheinen, den Siebdruck/Tiefdruck gemäß EP-B 149.135 statt für reversible nun für irreversible Verklebungen zugänglich zu machen.

Die Erfindung zeigt hier einen für die Praxis gangbaren Weg, der sogar zu Produkten führt, die nicht nur in hervorragender Weise irreversibel und also permanent verklebt werden können, sondern zudem wesentliche und für die praktische Anwendung bedeutsame Vorteile gegenüber bisher bekannten permanent zu verklebenden Produkten aufweisen.

Im Rahmen der durchgeführten Untersuchungen erwies es sich mit der für die Herstellung reversibler Produkte bekannten Technologie, insbesondere des rotativen Siebdrucks, als möglich, Selbstklebefilme und dergleichen herzustellen, die in ihren Eigenschaften den Bereich der Haushalts- und Bürofilme zuzuordnen sind. Kunststoffilme und Folien lassen sich so z.B. mit wäßrigen Haftklebedispersionen im rotativen Siebdruck dergestalt beschichten, daß im Gegensatz zu den halbkugelförmigen Kalotten aus EP-B 149 135 stark abgeflachte Klebmassesegmente geschaffen werden. Die daraus resultierende größere Kontaktfläche zu Haftuntergründen ergibt bei entsprechend gewählten Klebemassen eine ausreichende Klebrigkeit (Tack) sowie Adhäsion für dauerhafte, auf empfindlichen Haftuntergründen nicht mehr zerstörungsfrei ablösbaren Verklebungen. Schon Auftragsgewichte von 6 - 20 g/m², bevorzugt 9 - 16 g/m², führen zu guten klebtechnischen Werten. Dies entspricht einer Einsparung von Klebemasse von 20 bis 60 % gegenüber bisher üblicher und erforderlicher, vollflächiger Beschichtung.

Aus diesem Material geschnittene Klebfilmrollen und dergleichen zeigen vorteilhafte Eigenschaften:
- durch die kleinen Klebersegmente mit kurzen, klebmassenfreien Bereichen dazwischen, werden beim Wickeln der Rollen geringe Mengen Luft regelmäßig zwischen den Filmlagen mit eingerollt. Durch die unterschiedliche Lichtbrechung in den mikroskopisch feinen Bereichen erscheinen die Filmrollen gleichmäßig milchig opak, ohne Spuren von Fischaugen aufzuweisen. Es ist zudem ohne weiteres möglich, diese Rollen, mit verglichen zu Glattstrichrollen, geringeren Wickelspannungen zu fertigen,
- werden aus vollflächig glatt beschichteten Filmen straff gewickelte Rollen hergestellt, so treten die unerwünschten Erscheinungen der Seitenklebrigkeit und/oder des Teleskopierens der Filmwicklungen auf. Diese Probleme werden durch die erfindungsgemäßen Filme vermieden. Die massefreien Bereiche zwischen den Klebersegmenten können bei gegebenenfalls auftretenden Fließerscheinungen der Klebemasse unter Druck (Wickelspannung) als Pufferbereiche dienen und damit die gezielte Fließbewegung der Masse zur Rollenkante hin minimieren: die lästige Seitenklebrigkeit tritt nur in untergeordnetem Umfang auf bzw. entfällt gänzlich,
- ähnlich verhält es sich mit der Erscheinung des Teleskopierens: die elastischen Eigenschaften der Haftklebemasse und die nur segmentartige Verbindung zwischen zwei Lagen des Filmes auf der Rolle reduzieren die Neigung erfindungsgemäß gefertigter Filmrollen zum Teleskopieren,
- für den Nutzer der Filmrollen ist es immer wieder mit lästigem Aufwand verbunden, bei einer bereits benutzten Rolle mit den Fingernägeln den Filmanfang zu finden, sofern dieser nicht, wie in gebräuchlichen Abrollern der Fall, speziell fixiert gehalten wird. Die Beschichtung des Filmes mit diskreten, unterbrochenen Klebemassensegmenten läßt auch massefreie Bereiche am Filmanfang auftreten, wobei unmittelbar benachbarte Klebmassesegmente als Abstandshalter fungieren und so für den Anwender ein leichteres Finden und Ablösen des Filmendes von der Rolle ermöglichen.

Bei der Anwendung der erfindungsgemäß hergestellten Selbstklebefilme und dergleichen treten die oben genannten Nachteile der bisher bekannten Haushalts- und Bürofilme nicht auf, bzw. ausgeprägte Verbesserungen sind zu erkennen. Bei Verklebungen gebräuchlicher Filme auf Haftuntergründen geringer Festigkeit, wie Schreib-, Durchschreibe- und Zeitungspapier, hat der Anwender Schwierigkeiten, fehlerhafte Verklebungen zu korrigieren, ohne daß er Zerstörungen des Haftuntergrundes in Kauf nehmen muß. Da bei Papier die Anfangseinreißkraft höher liegt als die Weiterreißkraft, führt bei einem Korrigieren der Verklebung ein anfängliches leichtes Ausfasern und Rupfen bei Fortsetzung des Abziehvorganges zwanghaft zum vollflächigen Einreißen und Spalten. Der erfindungsgemäße Klebefilm und dergleichen dagegen hat den Vorteil, daß beim Vorliegen einzelner Klemassesegmente es seltener zu großflächigen Zerstörungen des Haftuntergrundes kommt, da jede Unterbrechung der Klebmassenbeschichtung eine Sollabbruchstelle des Weiterreißvorganges ist. Die Spaltung wird unterbrochen und die dann wieder notwendige, höhere Anfangseinreißkraft muß erneut geleistet werden. Da bei den erfindungsgemäß hergestellten Klebefilmen der Abstand zwischen den einzelnen Klebersegmenten geringer gehalten ist verglichen mit den reversiblen Produkten (wie den Haftnotizzetteln) und sich die Klebersegmente sogar in untergeordnetem Maße berühren können, ist der Effekt des Nicht-weiter-Reißens nicht zu ausgeprägt wie bei den wiederablösbaren Flächengebilden.

Von weiterem Vorteil ist der erfindungsgemäße Selbstklebefilm auf nicht porösen, glatten Untergründen. So bereitet bei handelsüblichen Filmen die Beseitigung eingeschlossener Luftblasen Probleme, die nur durch Wiederablösen der Verklebung mit den eben geschilderten Nachteilen bzw. mittels Durchstechen des Klebefilms im Bereich der Luftblase gelöst werden können. Durch die Beschichtung des erfindungsgemäßen Selbstklebefilms und dergleichen mit unterbrochenen Klebersegmenten und massefreien Bereichen dazwischen sind für eingeschlossene Luft selbst bei bereits durchgeführter Verklebung kleine Kanäle zum Entweichen vorhanden. Durch leichten Preßdruck auf die blasige Stelle der Verklebung läßt sich diese leicht und mühelos entfernen. Dies schließt die Möglichkeit ein, eine Blasenbildung auch bei Untergründen, die gasförmige Substanzen absondern (z.B. Freisetzen von Restlösemitteln in Farben), zu vermeiden bzw. die gebildeten Blasen ohne Ablösen leicht zu beseitigen.

Für die Herstellung der erfindungsgemäß einbezogenen Selbstklebebänder und -filme finden neben Papierträgern, Folien, ausgerüsteten Geweben und Vliesen alle gebräuchlichen dünnen Filme aus verschiedenen Kunststoffen Anwendung, insbesondere dünne, transparente Filme aus PVC, Polyolefinen, Polyeser, Polyurethan, Celluloseacetat oder anderen Polymeren. Die Dicken derartiger Filme liegen überwiegend in den Bereichen von 10 - 150 µ, bevorzugt 15 - 50 µ. Zur Verbesserung der Klebmassenverankerung auf den Substraten kann in Abhängigkeit von den verwendeten Trägern und Kleberdispersionen ein Verankerungsstrich geeigneter Art bzw. eine geeignete Vorbehandlung (Coronaentladung, Flammenvorbehandlung, Plasmabehandlung, chemische Behandlung u.ä.) angeraten sein. Desweiteren kann je nach Klebdispersionstype und Art des verwendeten Trägers auf der klebmassenabgewandten Seite des Trägers eine antiadhäsive Ausrüstung mit bekannten Trennmitteln wie Silikonen, Stearylverbindungen u.ä. notwendig sein, um bei den fertigen Rollen ein produktgerechtes, leichtes Wickeln des Klebefilms von der Rolle zu gewährleisten.

Vorteilhaft für die erfindungsgemäßen Selbstklebebänder und -filme ist der Umstand, daß für die Kleberrezeptierungen auf handelsübliche Produkte zurückgegriffen werden kann. Neben Natur- und Synthesekautschuklatices, die mit Weichharzdispersionen versetzt werden, handelt es sich hier vor allem um Polyacrylatdispersionen, die überwiegend aus Copolymerisaten von Acrylsäureestern mit Alkoholen von 2 bis 12 C-Atomen Kettenlänge, besonders aber 4-8 C-Atomen, mit geringen Anteilen monoolefinischen Mono- oder Bicarbonsäuren sowie weiteren copolymerisationsfähigen Monomeren wie Vinylether oder/und -ester, Acrylnitril u.ä., ohne daß für die Aufzählung der genannten Substanzklassen der Anspruch auf Vollzähligkeit erhoben wird. Die geeigneten Haftklebedispersionen haben Glastemperaturen von unter 25°C, insbesondere unter 0°C, und einen hohen Feststoffgehalt von 40 - 75 %, bevorzugt 45 - 70%, und sind nach der gängigen Klassifizierung der Oberflächenklebrigkeit bei Raumtemperatur als klebend bis stark klebend einzustufen.

In Spezialfällen können auch Organosole und Plastisole als Klebmassen zum Einsatz kommen, sowie lösungsmittelfreie 100%ige Systeme und auch Schmelzhaftkleber.

Die bevorzugten Dispersionen werden bei Bedarf zur Erhöhung der Anfangsklebrigkeit sowie der Adhäsion mit Weichharzdispersionen modifiziert: als besonders geeignet erwiesen haben sich neben Kohlenwasserstoff- und Terpenharzdispersionen und Dispersionen von Polyvinylisobutylether die Tallölharzester in Dispersionsform, wobei die Erweichungspunkte überwiegend im Bereich 30 - 90°C liegen.

Je nach Einsatz der Klebmassen und um eine dem Auftragsverfahren optimal angepaßte Verarbeitbarkeit zu erhalten, können den Selbstklebemassen übliche Mengen an Verdickungsmitteln, Stabilisatoren, Netzmittel, Alterungsschutzmittel und Pigmenten zugesetzt werden.

Zur Herstellung der erfindungsgemäßen Gegenstände, wie Selbstklebebänder und -film, eigenen sich insbesondere die bekannten technischen Druckverfahren von Art des Siebdruckes oder Tiefdruckes, wobei das Substrat sowohl ein- als auch beidseitig beschichtet werden kann. Auch ein indirekter Auftrag des Haftklebers, z.B. nach einem Transferverfahren unter Zuhilfenahme eines dehäsiv ausgerüsteten Zwischenträgers ist mögliche, ferner aber auch Tintenstrahldruck oder Sprühen.

Vorzugsweise verwendet wird das in EP-A 149 135 detailliert beschriebene Auftragsverfahren des rotativen Siebdruckes. Weniger geeignet ist allerdings die dort beschriebene, für wiederablösbare Verklebungen geeignete halbkugelförmige Kalottenform der Klebmasse mit breiter Basisfläche und abgerundetem, gewölbtem Querschnittsprofil. Durch die Kalottenform steht besonders bei Verklebungen auf glatten Untergründen nur eine geringe Verklebungsfläche zur Verfügung, die ein wesentliches Kriterium für die Wiederablösbarkeit darstellt. Zur Sichtbarmachung der nutzbaren Verklebungsfläche hat sich das Verfahren bewährt, die Klebmassebeschichtung mit Kohlepapier (Durchführung siehe Beispiel 1) anzufärben: nach WO 85/04602 wiesen wiederablösbare Produkte einen flächenmäßigen Anteil von 10 - 30 % auf. Für den erfindungsgemäß beschriebenen Selbstklebefilm ist dagegen ein anfärbbarer Anteil von 30 - 90 % der Fläche, bevorzugt 40 - 75 %, geeignet, der vorzugsweise durch eine abgeplattete Form der Klebmassesegmente zu erreichen ist. Bei Anwendungen auf glatten Untergründen steht so eine größere Verklebungsfläche zur Verfügung. Für die produktgerechte Anwendbarkeit ist es nicht erforderlich, daß die Klebmassebeschichtung in idealer Weise aus diskreten, räumlich abgegrenzten Segmenten besteht - partielle Übergänge zwischen den Segmenten verändern das Eigenschaftsspektrum nicht oder nur unwesentlich.

Nicht nur die Eigenschaften der Klebmasse wie Strukturviskosität, Thioxtropie und Verarbeitungsviskosität beeinflussen die Geometrie der Klebersegmente; zusätzlich stehen bei der Beschichtung diverse Steuerparameter zur Verfügung:
- für Gravur-/Siebzylinder Anzahl der Löcher pro Flächeneinheit sowie der Lochdurchmesser Wandstärke der Schablone, Tiefe der Rasterung spezielle geometrische Lochanordnungen,
- beim Siebdruck ferner Bauart, Material, Positionierung und Geometrie des Rakels sowie Veränderung des Anpreßdrucks des Rakels;
- nachgeschaltete Verfahrensschnitte wie Schlepprakel zum Abplatten der nicht getrockneten Kalotten oder Kalandern der teilweise oder ganz getrockneten Kalotten (heiß oder kalt),
wobei die Auflistung nicht den Anspruch auf Vollständigkeit erhebt; vielmehr kann der Fachmann geeignete Änderungen vornehmen, ohne den Rahmen der Erfindung zu verlassen.

Anschließend an die Beschichtung der wäßrigen Kleberdispersion folgt die Trocknung der Klebemasse durch Heißluft, Infrarot oder Hochfrequenzstrahlung. Soweit es für die Produkteigenschaften wünschenswert erscheint, ist eine nachträgliche Modifikation der Klebereigenschaften, wie Nachvernetzung durch Wärme, UV, Gamma-, Elektronen- oder Hochfrequenzstrahlung möglich.

Die erfindungsgemäß geeigneten Klebstoffsegmente stellen vorzugsweise stark abgeflachte Kalotten dar bis hin zu den idealen Zylindern. Der Abstand zwischen den einzelnen Klebersegmenten beträgt bevorzugt weniger als 50% des Basis-Durchmessers der Segmente, besonders bevorzugt weniger als 25%. Partielles Berühren der Klebersegmente, besonders an der Basis, ist für die erfindungsgemäß beschriebenen Eigenschaften zulässig.

Der Basisdurchmesser der Klebersegmente kann insbesondere in einem Bereich von 20 - 1.000 My gewählt werden, bevorzugt 100 - 600 My. Von der Form seiner Basis her sind die Klebersegmente nicht auf kreisförmige oder angenähert kreisförmige Geometrien beschränkt: ovale, drei-, vier- und vieleckige u.ä. Basisgeometrien sind ebenfalls mgölich.

Nachfolgend wird die Erfindung anhand von Beispielen verdeutlicht, ohne daß der Umfang der Erfindung auf diese Beispiele beschränkt ist. Vielmehr kann der Fachmann anhand der beschriebenen Erfindung geeignete Modifikationen und Veränderungen vornehmen, ohne damit den Rahmen der Erfindung zu verlassen.

### Beispiel 1

Als Substrat wird eine 35 My dicke, transparente Hart-PVC-Folie (Firma Azotherm) eingesetzt, die zur Verbesserung des Abrollverhaltens einseitig mit einer Stearylcarbamat-Trennschicht antiadhäsiv ausgerüstet wird.

Die wäßrige Haftklebedispersion setzt sich aus handelsüblichen Bestandteilen zusammen: 85 Gew.-Teile Acronal^{(R)} V.205 (BASF), 15 Gew.-Teile Silvatac^{(R)} AQ 5560 (Sivachem Corp.). In die Acrylatdispersion V.205 wird Carbopol^{(R)} 934 (Goodrich) eingerührt und nach 24 stündigem Quellen mit Ammoniak auf pH=8 eingestellt. In die bereits hochviskose Masse wird die Weichharzdispersion Silvatac eingerührt. Die Menge Carbopol ist so bemessen, daß eine Ruheviskosität von 25 - 30 Pas (Messung mit Viscotester VT02 von Firma Haake) erreicht wird. Alterungsschutzmittel können verwendet werden, jedoch wurde hier darauf verzichtet.

Zur Beschichtung wird an einem handelsüblichen Rotations-Siebdruckwerk eine galvanisch hergestellte, zylindrische Druckschablone mit ca. 600 Löchern/cm² und einer Wandstärke von ca. 0,1 mm benutzt. Die Beschichtungsgeschwindigkeit beträgt 30 m/min. Der Haftkleberauftrag wird anschließend in einem konventionellen Trockenkanal getrocknet und das klebende Filmmaterial zur Rolle aufgewickelt. Aus dieser Mutterrolle werden anschließend 19-mm breite Kleinrollen geschnitten.

Zur Bestimmung der Schälbarkeit (180^{o} Peel Adhesion Test) wird ein 19 mm breiter Streifen auf eine V₂A-Stahlplatte der mittleren Rauhigkeit von 0,05-0,4 My geklebt und mittels eines Überrollgerätes zehnmal mit einer 4-kg-Stahlrolle bei einer Geschwindigkeit von 10 m/min. angedrückt. Die Kraft zum Ablösen der Verbindung wird unter 180° in einem Zug-Dehnungs-Prüfgerät bei 300 mm/min aufgenommen und als Klebkraft (Stahl) in N/cm angegeben.

Zur Messung der Kohäsion (Shear-test) wird ein 13 mm breiter Film in 20 mm Länge auf ein V₂A-Prüfblech geklebt und nach 24 h Konditionierung senkrecht mit definierten Gewichten belastet. Maß für die Scherfestigkeit ist die Zeit bis zum Ablösen der Verklebung (statischer Schertest). Alternativ dazu wird bei Bedarf nach dem dynamischen Schertest der Mikroscherweg bestimmt: das auf eine Stahlplatte geklebte Prüfmuster wird temperiert und nach senkrechtem Anhängen von 300 g zeitlich die Kriechstrecke über 12 Minuten registriert. Angegeben wird der Scherweg in My bzw. die Zeit bis zum Durchlaufen der Maximalstrecke von 36 mm.

Zur Ermittlung der für die Verklebung auf glatten Oberflächen zur Verfügung stehenden aktiven Klebefläche wird ein 10 x 10 cm großes Muster auf ein Kohlepapier gelegt und mit einer 4 kg Stahlrolle (Breite 5,5 cm) angedrückt. Das angefärbte Muster wird mit transparenter Folie abgedeckt, bei Bedarf mit Lupe oder Mikroskop begutachtet und die angefärbte Verklebungsfläche in Prozenten abgeschätzt.

Als Eignungstest für Verpackungszwecke hat sich der Päckchentest bewährt: 4 etwa 8 mm dicke Lagen aus PU-Schaum der Fläche 20 x 20 cm werden auf 10 x 20 cm gefaltet und mit einseitig glattem, weißen Wäschereipapier von 50 x 35 cm Bogengröße zu einem Päckchen eingepackt. Ein solches Päckchen wird mit 3 Klebestreifen von je 5 cm Länge und 12 mm Breite mittig auf der Vorderseite sowie an den beiden Stirnseiten verklebt. Angegeben wird die Anzahl der offenen Verschlüsse nach einer Woche Verklebung bei Raumtemperatur.

| Ergebnisse gemäß Beispiel 1: | |
|---|---|
| Masseauftrag: | 9 - 10 g/m² |
| Klebkraft (Stahl) sofort: | 3,4 - 3,8 N/cm |
| Klebkraft nach 2 Monaten: | 2,8 N/cm |
| Schertest (statisch): | 136 min |
| (5 N Belastung) | |
| Schertest (dynamisch): | 3 min |
| Verankerung auf dem Träger: | gut |
| aktive Verklebungsfläche: | 50 - 60 % |
| Päckchentest: | ≦ 10 % |

Die bessere Anfangskorrekturfähigkeit des Musters gemäß Beispiel 1 gegenüber einem käuflichen Consumerfilm (tesa^{(R)}-film 7121) ist an Verklebungen mit geringem Anpressen auf Schreibpapier zu erkennen: Bei dem Standardfilm läßt sich die Verklebung bereits nach 1 - 2 min nur noch unter vollflächigem Spalten des Haftuntergrundes lösen, bei dem Muster gemäß Beispiel 1 ist dagegen noch über 5 Minuten eine Korrektur möglich, ohne daß dieselbe Erscheinung auftritt.

### Beispiel 2

Unter Verwendung derselben Haftkleberdispersion wie im Beispiel 1 wird mit einer zylindrischen Siebschablone mit etwa 1100 Löchern / cm², und einem größeren Verhältnis von offener Lochfläche zur Gesamtsiebfläche (verglichen zu Beispiel 1) ein analoges Muster beschichtet. Vorgegangen wird gemäß Beispiel 1. Ergebnisse:
Masseauftrag: 16 g/m²
Klebkraft (Stahl) 4,4 - 4,6 N/cm
Schertest (statisch): 184 min (5 N Belastung)
aktive Verklebungsfläche: 55-65 %
Päckchentest: ≦5 %

### Beispiel 3

Auf eine biaxial gereckte Polypropylenfolie von 30 My Dicke der Firma Forchheim wird auf die druckvorbehandelte Seite mit der Siebdruckschablone aus Beispiel 1 eine Haftklebedispersion beschichtet, die zu 89,7 Gew.-Teilen aus Primal^{(R)} PS 83 D von Rohm & Haas, 9,5 Gew.-Teilen Snowtack^{(R)} 52 CF der Firma Tenneco sowie als Verdicker 0,8 Gew.-Teile Primal^{(R)} TT 615 von Rohm & Haas angemischt wird - die Viskosität beträgt etwa 30 Pas. Vorgegangen wird gemäß Beispiel 1. Ergebnisse:
Masseauftrag: 15 g/m²
Klebkraft (Stahl): 3,5 N/cm
Schertest (dynamisch): 280 My
Päckchentest: ≦10 %

## Patentansprüche

1. Selbstklebender, permanent zu verklebender Gegenstand mit einem Träger und einer Selbstklebemasse von über 2,0 N/cm Klebkraft auf Stahl (peel adhesion test), dadurch gekennzeichnet, daß
a) sich 6-20 g/m² Selbstklebemasse auf dem Träger befinden,
b) die Selbstklebemasse 35-95% der Fläche des Trägers bedeckt,
c) die Selbstklebemasse 30 - 90 % der Fläche des Trägers für glatte Oberflächen verklebungsaktiv bedeckt, wobei
d) sich die Selbstklebemasse in Form von diskontinuierlichen Segmenten auf dem Träger befindet, und
e) die diskontinuierlichen Segmente der Selbstklebemasse abgeflacht sind, wobei der Abstand zwischen den einzelnen Segmenten bevorzugt weniger als 50% und insbesondere 10 - 25 % des Basis-Durchmessers der Segmente beträgt.

2. Gegenstand nach Anspruch 1, dadurch gekennzeichnet, daß der Träger ein Klebeband-Träger, wie ein Papier, Gewebe, Vlies oder eine Kunststoff-Folie ist, auf dem sich 9 - 16 g/m² Selbstklebemasse befinden.

3. Gegenstand nach Anspruch 1, dadurch gekennzeichnet, daß die Selbstklebemasse mittels Tiefdruck, Tintenstrahldruck, Sprühen, Transferverfahren oder insbesondere Siebdruck, aufgetragen ist.

4. Gegenstand nach Anspruch 1, dadurch gekennzeichnet, daß die Selbstklebemasse als Plastisol, Organosol, 100%iges System, Schmelzhaftkleber (hot melt) oder insbesondere als eine wäßrige Dispersion aufgetragen ist.

5. Gegenstand nach Anspruch 1, dadurch gekennzeichnet, daß die Selbstklebemasse Scherstandzeiten (statisch) von mehr als 100 min bei 5 N Belastung und 20°C aufweist.

6. Gegenstand nach Anspruch 1, dadurch gekennzeichnet, daß der Basis-Durchmesser der Segmente 20 - 1000 My, insbesondere 100 - 600 My beträgt.

7. Gegenstand nach Anspruch 1, dadurch gekennzeichnet, daß der Träger einseitig oder beidseitig und gegebenenfalls unterschiedlich mit Selbstklebemasse ausgerüstet ist.

8. Verfahren zur Herstellung eines selbstklebenden, permanent zu verklebenden Gegenstandes nach Anspruch 1 - 7, dadurch gekennzeichnet, daß man die Selbstklebemasse einseitig oder beidseitig mittels Tiefdruck, Tintenstrahldruck, Sprühen, Transferverfahren oder insbesondere Siebdruck in einer Menge von 6 - 20 g/m² derart aufträgt, daß die Selbstklebemasse 35 - 95 % der Fläche des Trägers bedeckt und dabei 30 - 90 % der Fläche des Trägers für glatte Oberflächen verklebungsaktiv bedeckt, wobei die Selbstklebemasse in Form von abgeflachten diskontinuierlichen Segmenten auf den Träger beschichtet wird, die schließlich gegebenenfalls getrocknet und/oder vernetzt werden.

## Claims

1. Self-adhesive article to be permanently bonded, having a base material and a self-adhesive compound with an adhesive strength on steel of more than 2.0 N/cm (peel adhesion test), characterized in that
a) there are 6-20 g/m² of self-adhesive compound on the base material,
b) the self-adhesive compound covers 35-95% of the area of the base material,
c) the self-adhesive compound covers 30-90% of the area of the base material in a manner active for bonding on smooth surfaces, and
d) the self-adhesive compound is in the form of discontinuous segments on the base material, and
e) the discontinuous segments of the self-adhesive compound are flattened, the distance between the individual segments preferably being less than 50 % and in particular 10-25 % of the base diameter of the segments.

2. Article according to Claim 1, characterized in that the base material is a base material for adhesive tape, such as a paper, a woven fabric, a nonwoven or a plastic sheet, on which there are 9-16 g/m² of self-adhesive compound.

3. The article according to Claim 1, characterized in that the self-adhesive compound is applied by means of rotogravure, ink-jet printing, spraying, a transfer process or, in particular, screen printing.

4. The article according to Claim 1, characterized in that the self-adhesive compound is applied as a plastisol, an organosol, a 100% system, a hot-melt pressure-sensitive adhesive or, in particular, an aqueous dispersion.

5. The article according to Claim 1, characterized in that the self-adhesive compound has shear times (static) of more than 100 min under a load of 5 N and at 20°C.

6. The article according to Claim 1, characterized in that the base diameter of the segments is 20-1000 µ, in particular 100-600 µ.

7. The article according to Claim 1, characterized in that the base material is treated with self-adhesive compound on one or both sides and, if desired, in a different manner.

8. A process for the manufacture of a self-adhesive article to be permanently bonded, according to any one of Claims 1 to 7, characterized in that the self-adhesive compound is applied to one or both sides by means of rotogravure, ink-jet printing, spraying, a transfer process or, in particular, screen printing, in an amount of 6-20 g/m², in such a way that the self-adhesive compound covers 35-95% of the area of the base material, 30-90% of the area of the base material being covered in a manner active for bonding on smooth surfaces, and the self-adhesive compound is coated onto the base material in the form of flattened discontinuous segments which, if desired, are finally dried and/or crosslinked.

## Revendications

1. Objet auto-adhésif, destiné à adhérer de façon permanente avec un support et une masse collante auto-adhésive de force adhésive de plus de 2,0 N/cm sur l'acier (peel adhesion test), caractérisé en ce que
a) de 6 à 20 g/m² de masse collante auto-adhésive se trouvent sur le support,
b) la masse collante auto-adhésive recouvre de 35 à 95 % de la surface du support,
c) la masse collante auto-adhésive recouvre de 30 à 90 % de la surface du support de façon activement adhésive,
d) la masse collante auto-adhésive se trouvant sur le support sous la forme de segments discontinus et
e) les segments discontinus de la masse collante auto-adhésive étant aplatis, la distance entre les segments individuels étant de préférence de moins de 50 % et en particulier de 10 à 25 % du diamètre de base des segments.

2. Objet selon la revendication 1, caractérisé en ce que le support est un support de ruban adhésif, comme un papier, un tissu, un matelas de fibres ou une feuille de résine synthétique, sur lequel se trouvent de 6 à 16 g/m² de masse collante auto-adhésive.

3. Objet selon la revendication 1, caractérisé en ce que la masse collante auto-adhésive est appliquée par héliogravure rotative, par impression par jet d'encre, par pulvérisation, par procédé de transfert, ou en particulier par sérigraphie.

4. Objet selon la revendication 1, caractérisé en ce que la masse collante auto-adhésive est appliquée en tant que plastisol, en tant qu'organosol, en tant que système complet à 100 %, en tant qu'adhésif à fusion (hot melt) ou en particulier en tant que dispersion aqueuse.

5. Objet selon la revendication 1, caractérisé en ce que la masse collante auto-adhésive présente des temps de cisaillement (statique) de plus de 100 minutes sous une charge de 5 N et à 20°C.

6. Objet selon la revendication 1, caractérisé en ce que le diamètre de base des segments est de 20 à 1 000 µm, en particulier de 100 à 600 µm.

7. Objet selon la revendication 1, caractérisé en ce que le support est pourvu d'un côté ou des deux côtés et, le cas échéant, de façon distincte, de masse collante auto-adhésive.

8. Procédé de préparation d'un objet auto-adhésif, destiné à adhérer de façon permanente selon les revendications 1 à 7, caractérisé en ce que l'on applique la masse collante auto-adhésive d'un côté ou des deux côtés par héliogravure rotative, par impression par jet d'encre, par pulvérisation, par procédé de transfert ou en particulier par sérigraphie dans une quantité de 6 à 20 g/m² de telle manière que la masse collante auto-adhésive recouvre de 35 à 95 % de la surface du support et recouvre, ce faisant, de 30 à 90 % de la surface du support pour les surfaces lisses de façon activement adhésive, la masse collante auto-adhésive étant revêtue sur le support sous la forme de segments discontinus aplatis, qui sont, le cas échéant, finalement séchés et/ou réticulés.
